# EUROPEAN PATENT SPECIFICATION

(11) **EP 4 097 676 B1**
(45) Date of publication and mention of the grant of the patent: **18.11.2026**
(21) Application number: 21707534.0
(22) Date of filing: 28.01.2021
(51) Int. Cl.: G06T 7/70, G06T 7/00

(54) **CONFIDENCE-BASED BOUNDING BOXES FOR THREE DIMENSIONAL OBJECTS**
VERTRAUENSBASIERTE BEGRENZUNGSBOXEN FÜR DREIDIMENSIONALE OBJEKTE
CADRES DE DÉLIMITATION BASÉS SUR LA CONFIANCE POUR OBJETS EN TROIS DIMENSIONS

(30) Priority: 28.01.2020 US 202062966790 P
(43) Date of publication of application: 07.12.2022
(73) Proprietor: Embodied Intelligence, Inc., Emeryville, CA 94608 (US)
(72) Inventor: LIU, YuXuan, Berkeley, California 94710 (US); CHEN, Xi, Berkeley, California 94710 (US); MISHRA, Nikhil, Berkeley, California 94710 (US)
(74) Representative: Bartholomew, Anna
(86) International application number: PCT/US2021/015537
(87) International publication number: WO 2021/155029

(56) References cited:
- EP-A1- 3 508 937
- CN-A- 110 705 666
- ROMAN SEIDEL ET AL: "OmniDetector: With Neural Networks to Bounding Boxes", ARXIV.ORG, CORNELL UNIVERSITY LIBRARY, 201 OLIN LIBRARY CORNELL UNIVERSITY ITHACA, NY 14853, 22 May 2018 (2018-05-22), XP080880940

## Description

### CROSS-REFERENCE TO RELATED APPLICATIONS

### BACKGROUND

Many tasks require the ability of a machine to sense or perceive its environment and apply knowledge about its environment to future decisions. Machines programmed solely to repeat a task or action, encounter issues or frequently get stuck, often requiring human intervention too frequently to increase productivity or efficiency. Robotic devices and other machines are often guided with some degree of computer vision.

Computer vision techniques enable a system to gain insight into its environment based on digital images, videos, scans, and similar visual mechanisms. High-level vision systems are necessary for a machine to accurately acquire, process, and analyze data from the real world. Computer vision and machine learning techniques allow a machine to receive input and generate output based on the input. Some machine learning techniques utilize deep artificial neural networks having one or more hidden layers for performing a series of calculations leading to the output. In many present-day applications, convolutional neural networks are used for processing images as input and generating a form of output or making decisions based on the output.

Artificial neural networks, modeled loosely after the human brain, learn mapping functions from inputs to outputs and are designed to recognize patterns. A deep neural network comprises an input layer and an output layer, with one or more hidden layers in between. The layers are made up of nodes, in which computations take place. Various training methods are used to train an artificial neural network during which the neural network uses optimization to continually update weights at the various nodes based on failures until a satisfactory model is achieved. Many types of deep neural networks currently exist and are used for a broad variety of applications and industries including computer vision, series forecasting, automated driving, performing medical procedures, aerospace, and many more. One advantage of deep artificial neural networks is their ability to learn by example, rather than needing to be specifically programmed to perform a task, especially when the tasks would require an impossible amount of programming to perform the operations they are used for today. EP 3508937 A discloses a mobile cleaning robot for cleaning floors. The robot has at least one camera for capturing images of the environment and a recognition module configured to recognize objects in the environment based on the images captured by the at least one camera.

It is with respect to this general technical environment that aspects of the present technology disclosed herein have been contemplated. Furthermore, although a general environment has been discussed, it should be understood that the examples described herein should not be limited to the general environment identified in the background.

### BRIEF SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments of the technology described herein generally relate to systems and methods for modeling uncertainty. More specifically, certain embodiments relate to computer imaging, expressing uncertainty in various relevant dimensions and methods for utilizing knowledge related to uncertainty in a meaningful way. According to one aspect of the invention, a method of operating a computer vision system is disclosed in independent claim 1.

Other aspects the method of the invention are disclosed in the dependent method claims.

According to another aspects of the invention a system is disclosed in independent claim 6. Other aspects the system of the invention are disclosed in the dependent system claims.

According to another aspects of the invention one or more computer-readable storage media are disclosed in independent claim 11. Other aspects the computer-readable storage media of the invention are disclosed in the dependent computer-readable storage media claims.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a computer vision and robotic picking environment in accordance with some embodiments of the present technology.
Figure 2 is a flow chart with a series of steps for modeling uncertainty in accordance with some embodiments of the present technology.
Figure 3 is a flow chart with a series of steps for modeling uncertainty in accordance with some embodiments of the present technology.
Figure 4 is a flow chart with a series of steps for modeling uncertainty in accordance with some embodiments of the present technology.
Figure 5 illustrates an example of predicting bounding boxes with neural networks in accordance with some embodiments of the present technology.
Figures 6A-6J illustrate examples of bounding box predictions and modeling uncertainty in accordance with some embodiments of the present technology.
Figures 7A-7C illustrate examples of bounding box predictions and various confidence requirements in accordance with some embodiments of the present technology.
Figure 8 illustrates bounding boxes for an object across a range of certainty bounds in accordance with some embodiments of the present technology.
Figure 9 is an example of a computing system in which some embodiments of the present technology may be utilized.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

Various embodiments of the technology described herein generally relate to systems and methods for modeling uncertainty. More specifically, certain embodiments relate to neural network models for expressing uncertainty in various relevant dimensions and methods for utilizing knowledge related to uncertainty in a meaningful way. In some embodiments, a robotic device may work in collaboration with a computer vision system for collecting visual data. Based on the visual data, machine learning techniques are implemented for identifying and quantifying uncertainty related to one or more dimensions of the visual data. The system can then make decisions related to future actions performed by the robotic device based on the uncertainty and operate the robotic device accordingly. In some examples, the machine learning techniques comprise the utilization of one or more artificial neural networks.

Artificial neural networks, such as those that may be implemented within embodiments related to computer vision, uncertainty modeling, picking, segmentation, ranking, and depth perception models described herein, are used to learn mapping functions from inputs to outputs. Generating mapping functions is done through neural network training processes. Many various types of training and machine learning methods presently exist and are commonly used including supervised learning, unsupervised learning, reinforcement learning, imitation learning, and many more. During training, the weights in a neural network are continually updated in response to errors, failures, or mistakes. In order to create a robust, working model, training data is used to initially dial in the weights until a sufficiently strong model is found or the learning process gets stuck and is forced to stop. In some implementations, the weights may continue to update throughout use, even after the training period is over, while in other implementations, they may not be allowed to update after the training period.

Parameters of a neural network are found using optimization with many, or sometimes infinite, possible solutions. Modern deep learning models, especially for computer vision and image processing, are based on convolutional neural networks, although may also incorporate other deep generative models. As described herein, artificial neural networks for uncertainty modeling, computer vision, robotic picking, and other processes described herein first require training. A variety of different training methods may be used to train a neural network for modeling uncertainty, segmenting units, or picking and placing items in a bin in accordance with embodiments of the technology described herein.

There is inherently some degree of uncertainty that comes along with an output to a machine learning model. In many scenarios, the uncertainty goes unused or ignored. However, a neural network model able to express that uncertainty can enable decision-making based on risk tolerances or other confidence parameters associated with a task. Most computer vision models used today output a single, unimodal prediction. Single prediction models can be wrong in their results but have no way to know that they are wrong or why. The output distributions from these predictions are often not expressive enough to capture the full range of uncertainty. For critical applications, single predictions may be insufficient and provide no means for trading off confidence with other performance metrics. Thus, training models that have more expressive output distributions so that they can model uncertainty allows decision making based on high-confidence predictions derived from predicted uncertainty distributions.

Having a representation of uncertainty can benefit computer imaging, machines, and machine learning techniques in a wide variety of applications. One application contemplated herein is the application of uncertainty modeling to computer vision systems for robotic picking because when a machine is going to interact with another object, it can be very useful to understand how confident a "best guess" is before attempting to interact with the object. In some examples, a neural network may express uncertainty in various relevant dimensions related to another object or an item that the robotic device intends to pick up and algorithms may then be used to operate the robot differently based on uncertainty. Parameters of an object where it may be useful to understand how uncertain a model is regarding the parameter may include an object's weight, physical shape, materials, size, edges, and similar parameters that a computer vision system may have uncertainty about. A traditional neural network may simply produce a best guess for each of those parameters, but in scenarios where it is best to be risk averse, it can be dangerous or have consequences to take a shot in the dark if the best guess it still relatively uncertain. Thus, in the present example, one or more neural networks may be used to determine the uncertainty and accordingly affect the robot's behavior. Understanding the uncertainty associated with an action in this scenario may be important to get right because getting it wrong could cause a wide variety of negative results. For example, if a robot picks up an item to move it to another bin or conveyor belt, but moves the item too close to something because it had deduced that the item was smaller than it actually was, it can cause issues such as dropping, hitting/damaging equipment, and the like.

Many scenes a computer vision system can view are inherently ambiguous. For example, when looking at a scene with several tightly packed boxes, the height of each box is inherently ambiguous to the system because there is not enough visual information available regarding the sections of the boxes that cannot be seen. A model that outputs only one prediction is unable to properly capture this uncertainty. Thus, embodiments of the present disclosure use latent codes with a variant mask-regions with convolutional neural network (Mask-R-CNN) to achieve high-level instance bounding box predictions, wherein the R-CNN of the present example may take one or more images and identify at least one object via a bounding box. Masks may be used to label an object corresponding to the bounding box. One benefit of the present approach is the ability to express uncertainty only about dimensions where uncertainty exists. For example, if one side of an object is fully visible to the vision system, there is little to no uncertainty about that side of the object, while non-visible sides may have a high degree of uncertainty. Thus, rather than adding an arbitrary amount of space to each dimension to account for generic uncertainty, a robot may advantageously use its knowledge of what is certain and what is uncertain to increase accuracy and efficiency in predictions or movements.

An autonomous robot may benefit from a means for recognizing the environment around it and processing that information to come up with a way to perform a task. Thus, if a robot is picking items out of a bin, it is beneficial to be able to sense the location and position of a specific item and apply that to determine how to pick up the item and move it to a desired location. A robot capable of sensing and applying that knowledge, even within highly repetitive settings, dramatically decreases the need for human intervention, manipulation, and assistance. Thus, human presence may no longer be required when items aren't perfectly stacked or when a robot gets stuck, as a few examples. If a robot regularly gets stuck, it may defeat the purpose of having a robot altogether, because human intervention may be frequently required in order to assist the robot.

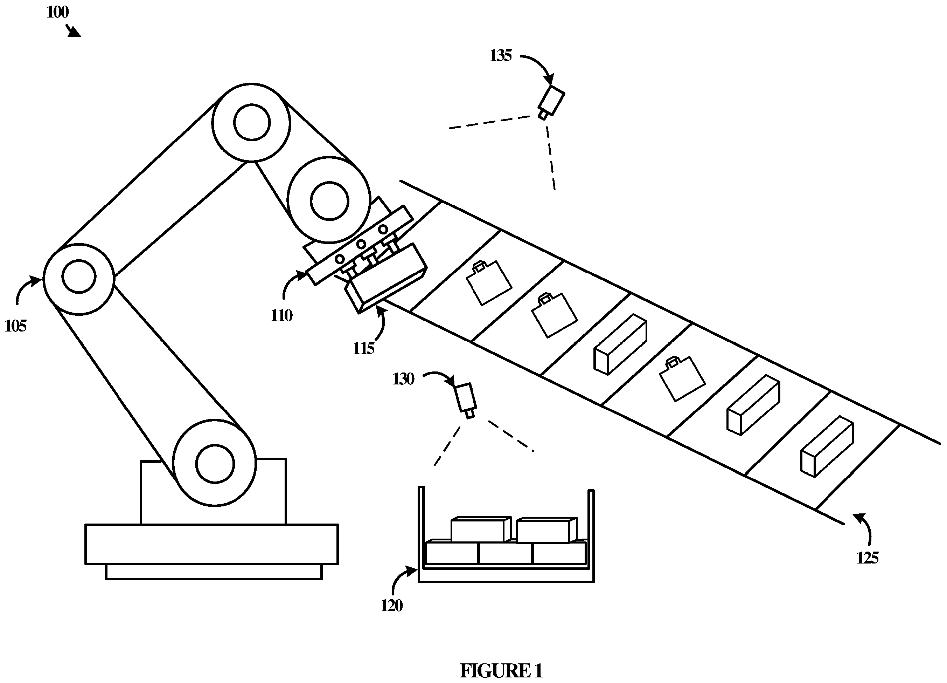

Figure 1 illustrates an example of warehouse environment 100 having robotic arm 105 for picking items from a bin in accordance with some embodiments of the present technology. Figure 1 includes robotic arm 105, bin 120, conveyor belt 125, camera 130, and camera 135. Robotic arm comprises picking element 110. Picking element 110 comprises a set of suction-based picking mechanisms, however different numbers and types of picking mechanisms may be utilized in accordance with the present embodiment. Bin 120 is holding boxes that may be found in a warehouse, commercial setting, or industrial setting. Many other types of items may be in a bin or similar container for picking in accordance with the present embodiment. In the present example, robotic arm 105 is a six-degree-of-freedom (6DOF) robotic arm. Picking element 110 is designed for picking items out of bin 120 and placing them onto compartments of conveyor belt 125.

In some examples, robotic arm 105 and picking element 110 may pick boxes from bin 120 one at a time according to orders received and place the items on the conveyor belt for packaging or into packages for shipment. Furthermore, robotic arm 105 and picking element 110 may be responsible for picking items from various locations in addition to bin 120. For example, several bins comprising different merchandise may be located in proximity to robotic arm 105, and robotic arm 105 may fulfil requests for the different pieces of merchandise by picking the correct type of merchandise and placing it onto conveyor belt 125.

Picking element 110 comprises at least one picking mechanism for grabbing items in a bin. Picking mechanisms may include one or more suction mechanisms, gripping mechanisms, robotic hands, pinching mechanisms, magnets, or any other picking mechanisms that could be used in accordance with the present disclosure. In some examples, picking element 110 may be additionally used for perturbation, such as poking, touching, stirring, or otherwise moving any items in bin 120, as just a few examples. In further examples, robotic arm 105 may comprise a perturbation element such as a pneumatic air valve connected to a pneumatic air supply, wherein the pneumatic air valve blows compressed air into bins in certain situations. A perturbation sequence may be used in situations where the deep neural network (DNN) or another model determines that there is low probability that it will be able to pick up any items in bin 120 as they are presently arranged. In some examples, the robotic arm may have already tried and failed to pick every visible item in the bin, and the system therefore decides to initiate a perturbation sequence. Robotic arm 105 may move and position picking element 110 such that it is able to pick up an item in bin 120. In certain embodiments, determining which item to pick up and how to pick it up is determined using at least one deep artificial neural network. The DNN may be trained to guide item pick-up and determine which items have the greatest probabilities of pick-up success. In other embodiments, picking may be guided by a program that does not use a DNN for decision making.

A computer vision system in accordance with embodiments herein may comprise any number of visual instruments, such as cameras or scanners, in order to guide motion, picking, and uncertainty modeling a computer vision system receives visual information and provides it to a computing system for analysis. Based on the visual information provided by the computer vision system, the system can guide motions and actions taken by robotic arm 105. A computer vision system may provide information that can be used to decipher geometries, material properties, distinct items (segmentation), bin boundaries, and other visual information related to picking items from a bin. Based on this information, the system may decide which item to attempt to pick up and can then use the computer vision system to guide robotic arm 105 to the item. A computer vision system may also be used to determine that items in the bin should be perturbed in order to provide a higher probability of picking success. A computer vision system may be in a variety of locations allowing it can properly view bin 120 from, either coupled to or separate from robotic arm 105. In some examples, a computer vision system may be mounted to a component of robotic arm 105 from which it can view bin 120 or may be separate from the robotic device.

Camera 130 images the contents of bin 120 and camera 135 images a region of conveyor belt 125. Each of camera 130 and camera 135 may comprise one or more cameras. In some examples, a camera in accordance with the present example such as camera 130 comprises an array of cameras for imaging a scene such as bin 120. Camera 130 and camera 135 are part of a computer vision system associated with robotic arm 105 such as a computer vision system in accordance with the technology disclosed herein.

In the example of Figure 1, robotic arm 105 has successfully picked box 115 from bin 120 and is in the process of moving box 115 to conveyor belt 125. The computer vision system including camera 130 may have helped guide robotic arm 105 when picking box 115. In some examples, before picking box 115, the computer vision system imaged the contents of bin 120, identifying box 115 for picking, and modeled the uncertainties associated with dimensions of box 115 using bounding boxes. Based on the uncertainty model and distribution of bounding boxes, the system of Figure 1 determined that the uncertainties associated with box 115 were not beyond a confidence tolerance and therefore that the robot may attempt to pick box 115. Robot 105 may then place box 115 onto conveyor belt 125 for distribution.

The uncertainty modeling used in accordance with Figure 1 advantageously uses expressive output distributions to capture the full range of uncertainty associated with an item and then uses the predicted distributions to make tunable confidence predictions that are well calibrated with the real world. A calibrated confidence prediction may be, for example, that a 90% confidence bounding box will fully contain the true object 90% of the time. In some examples, the downside of being wrong about the dimensions of an object is large, and therefore if the system is uncertain about the object, it may be better to leave the object instead of picking it and allow a human to interact with the object instead. Alternatively, if there is a low confidence prediction before going to pick an item, it may allow the machine to act with a larger margin of error. For example, if the item may be larger than predicted and the system is relatively uncertain of its size, it may move the item with extra error bounds by keeping the item at a larger distance to avoid it from hitting other objects.

The technology described herein should not be limited to robotic picking applications. The present technology has many applications in which a means for modeling uncertainty related to the outputs of neural networks is useful.

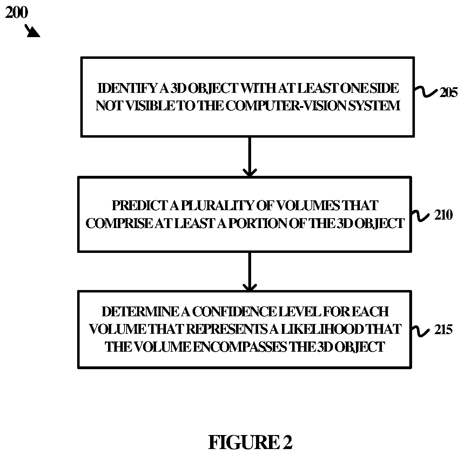

Figure 2 is a flow chart illustrating a series of steps for modeling uncertainty in various dimensions of a three-dimensional (3D) object in accordance with some embodiments of the present technology. In step 205, a computer vision system identifies a 3D object in at least one image with at least one side of the object not visible to the computer vision system. In some examples, the computer vision system may be the computer vision system including one or both of cameras 130 and 135 from Figure 1. The identified object may be an item from a bin, such as box 115 from bin 120, wherein the box is identified in addition to the other contents of bin 120. In some implementations, in order to identify the 3D object, a set of images is fed into multiple neural networks, wherein the neural networks process the images and produce a number of hypotheses for where a 3D bounding box could be.

In step 210, the computer vision system predicts a plurality of volumes that comprise at least a portion of the 3D object. In some implementations, step 210 also comprises finding object masks for visible items in the image. A mask may be any label or representation illustrating a segmentation of distinct items in the image. In certain embodiments, the plurality of volumes is a set of 3D bounding boxes, wherein a 3D bounding box represents a prediction of the minimum volume fully encompassing the box. Given an object mask, an RGB map, and a depth map, the system generates bounding box hypotheses of the minimum 3D volume comprising the box. In the present example, a trained autoregressive model is used to predict the bounding boxes associated with the object.

In step 215, the computer vision system determines a confidence level for each volume that represents a likelihood that the volume encompasses the 3D object. Based on the likelihoods that each volume encompasses the 3D object, one or more neural networks find commonalities between the volumes in order to predict the uncertain dimensions of the 3D object. In one manner of making predictions, points may be sampled from the plurality of bounding boxes from the model and a box is output that contains regions of high overlap according to a confidence tolerance.

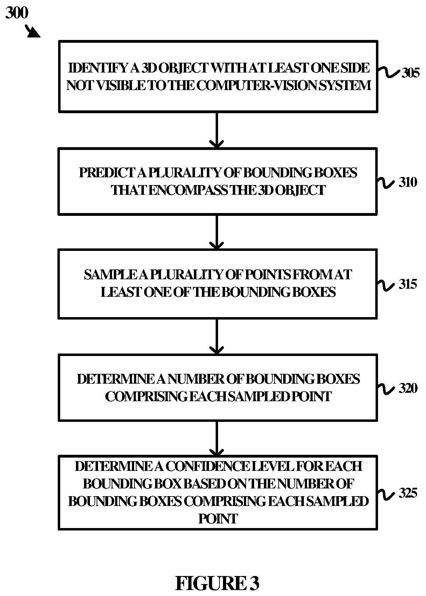

Figure 3 is a flow chart illustrating a series of steps for modeling uncertainty with bounding boxes according to some implementations of the present technology. In step 305, a computer vision system identifies a 3D object with at least one side of the 3D object not visible to the computer vision system. In some examples, the 3D object is an item in a warehouse bin that should be picked by a robotic arm such as robotic arm 105 from Figure 1. In step 310, the computer vision system predicts a plurality of bounding boxes that encompass the 3D object. Each bounding box represents a prediction of the minimum 3D volume that bounds the entire object. In some example, an autoregressive bounding box model is used in which multiple hypotheses (i.e., multiple predicted bounding boxes) are produced of where the box can be the intersecting areas between those boxes.

In step 315, the computer vision system samples a plurality of points from the plurality of bounding boxes. For each bounding box predicted, the system picks a random set of points from that box. From the random set of points, it is determined what percentage of the boxes contain each of those points. A large number of bounding box hypotheses are created, and a large number of points may be sampled. With the large amount of predictions and points, a reasonable representation of guesses can be modeled with a distribution illustrating a probability of different bounding boxes from a trained neural network. In step 320, the computer vision system determines a number of bounding boxes comprising each sampled point. In step 325, the system determines a confidence level for each bounding box based on the number of bounding boxes comprising each sampled point. Based on the confidence levels of the bounding boxes, a final prediction can be made based on a risk tolerance according to a specific scenario. For example, in a scenario where the consequences of underestimating the volume of an object are high, it may be best to choose a prediction that is more on the safe side, i.e., it may be overly large but the system is more confident that the bounding box comprises the entire object.

In accordance with the methods disclosed herein, a neural network may be trained to provide its best guess of what size a bounding box is and then repeat that prediction process until a large distribution of hypotheses are made. When predicting each dimension of a bounding box, the model may randomly sample within the likely dimensions, output a distribution over the dimensions, and then randomly pick one. There are many possible variations regarding what could be true for the uncertain parts of an object. Each box may be different in length, width, height, position, pose, angle, and similar properties. The possible parameters make for a very large number of possible combinations. Thus, it may end up being highly useful to determine discrete set of hypotheses and use those to construct a distribution across which a determined outcome can slide between conservative and non-conservative predictions.

A neural network for bounding box predictions, in some examples, may be trained on simulated data wherein boxes are randomly placed with random dimensions and locations, at least in part. The model may then have a large variety of different considerations for each dimension of an object, such as the length, the width, and the height. The present technology does not require prior knowledge about a modeled object, such as from inventory data or a database. When the system first observes an object, it considers the variety of different options for how long, wide, and tall it could be, in addition to other parameters. The model may predict a finite number of guesses, such as 500, for example. However, in theory there is continuous spectrum of possibilities, but modeling the continuous spectrum requires an unnecessary amount of computation power while choosing discrete predictions can still output a representative distribution.

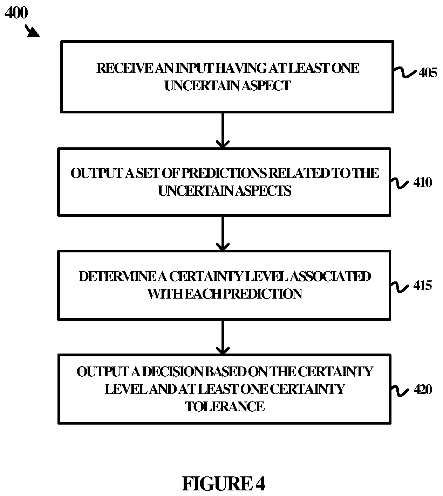

Figure 4 illustrates a series of steps for modeling and expressing uncertainty as it applies to a broad range of decision-making applications. In step 405, one or more DNNs receive at least one image comprising an uncertainty related to an aspect of the image or scene. In step 410, the one or more DNNs output a set of predictions related to the at least one uncertain aspect. In step 415, a certainty level is determined for each prediction of the set of predictions. In step 420, a decision is output based on the certainty level and at least one certainty tolerance.

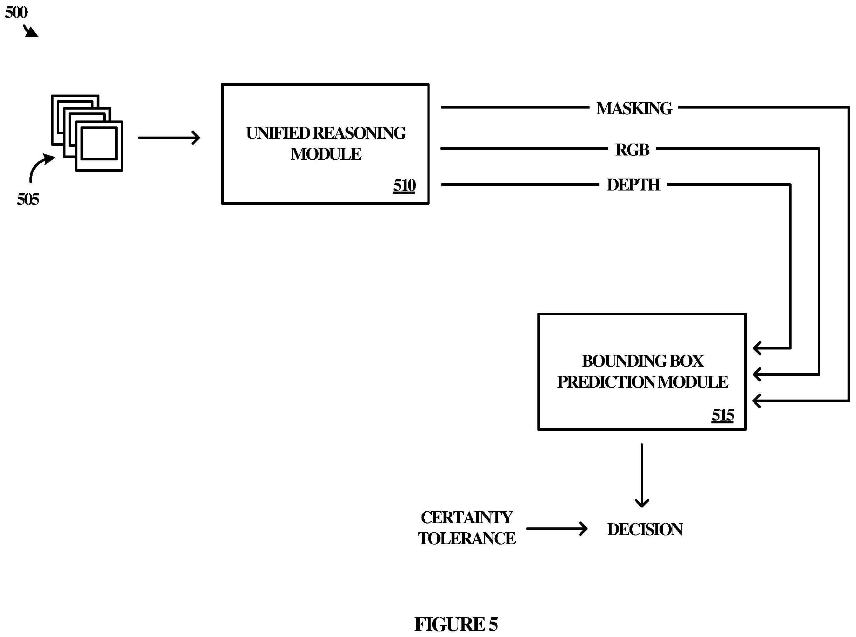

Figure 5 illustrates an example flow within environment 500 in accordance with some embodiments of the present technology. In the present example, images 505 are used as input to and processed in unified reasoning module 510. Images 505 may be one or more images taken by an imaging or computer vision system. Images 505, in the present example, are collected by at least one camera in communication with a robotic arm, as is exemplified in Figure 1. The images are processed in unified reasoning module 510. In some examples, unified reasoning model comprises at least one deep neural network trained for analyzing images. In the present example, image analysis includes performing segmentation and masking, RGB mapping, and depth mapping. However, fewer or additional image analysis processes may be included in unified reasoning module 510 and are anticipated.

Masking includes deciphering one or more distinct objects in images 505. Masking may include a variety of sub-processes to assist in finding distinct objects. Understanding the depth and RGB map of each object may assist in segmentation and masking and may also assist when it is time to approach and pick up an item with a robotic device. Although masking, RGB, and depth are illustrated as individual outputs for the purpose of illustration, the outputs of unified reasoning module 510 may be a single, unified model comprising information related to the various types of data discussed or a variation or combination of the outputted data.

The output or outputs of unified reasoning module 510 serves as input to bounding box prediction module 515. Bounding box prediction module 515 may process the unified model provided by unified reasoning module 510 to produce a set of predicted bounding boxes. The bounding boxes represent the minimum volume fully encompassing an object. Since many scenes a computer vision system sees are inherently ambiguous, a model that outputs a single prediction won't be able to properly capture uncertainty. For instance, in a scene with tightly packed boxes of different shapes and sizes, the dimensions of each box may be inherently ambiguous because not enough visual information is available to be certain about every dimension of each box. However, an autoregressive model can properly model the distribution of possible bounding boxes. Using samples from the autoregressive model, confidence boxes can be efficiently computed, wherein each bounding box represents a minimum volume bounding the object.

Once a set of bounding boxes has been generated representing a distribution of possible bounding boxes, a variety of different methods may be employed to give a probabilistic meaning to each box, such as an associated certainty. In one example, points may be sampled from the boxes to find the area where a certain percentage of the bounding box predictions agree or overlap. For example, if it determined that the system should avoid underestimating the size of an object, then it may be a requirement that 20% of the boxes share the predicted volumetric areas. In another example having different requirements, it may be predetermined that 90% of the bounding box predictions should overlap. These confidence-based areas provide quantile shapes as point clouds. Notably, the quantile shaped may produce a variety of shapes, such as cylinders and spheres, even when the model is only trained to predict boxes. Thus, in the final step, a final volume decision is output based on the defined certainty tolerance.

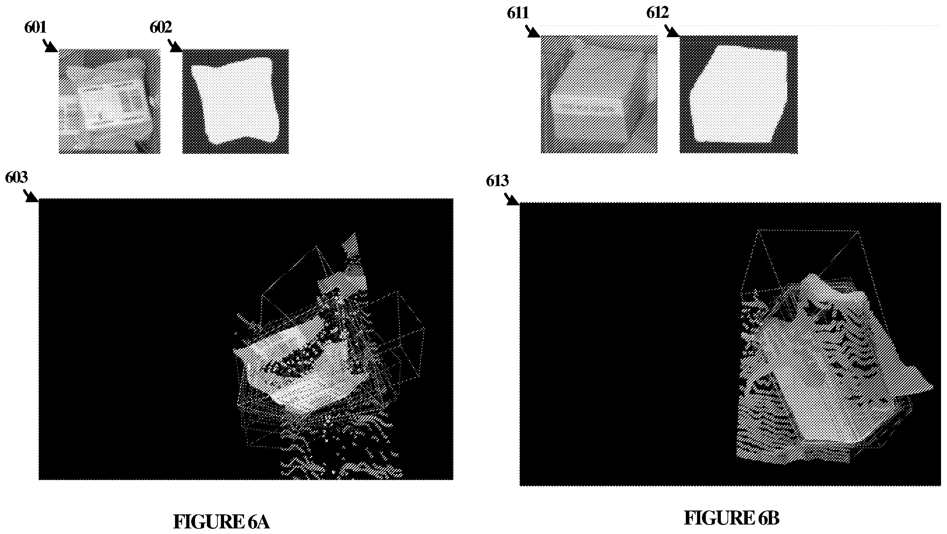

Figures 6A-6J show examples of bounding box prediction set for objects of various images along with a comparison of the bounding box predictions produced by the present technology against unimodal bounding box models. Boxes shown in blue and white in Figures 6A-6J are bounding box samples in accordance with the present technology and boxes shown in red and orange are produced with unimodal bounding box models. Single prediction models (i.e., unimodal models) can be wrong in their predictions but are unable to identify that they are wrong. On the contrary, the autoregressive bounding box models used herein output multiple hypotheses of where a box may be and can generate a more accurate prediction based on intersecting area between the gamut of predicted boxes. Furthermore, the autoregressive bounding box model is especially useful for occluded objects about which there isn't enough visual information to estimate the entire box.

In accordance with some embodiments of the present technology and the examples provided in Figures 6A-6J, a scene including an object is first captured using a single camera or a plurality of cameras. The image or images are then provided to a variety of neural networks, some of which may feed into other neural networks. A neural network for bounding box predictions will process an input image and produce a plurality of hypotheses for where the bounding box may be. Using the plurality of hypotheses, a degree of intersection is found for areas that the object is most likely to be. Then, based on results with intersecting areas, the hypotheses are compared to a confidence bound to guide a final pick of the bounding box that represents the minimum volume containing all of the object.

Figure 6A illustrates a set of bounding box predictions for an associated imaged object. Image 601 shows an original image of object an object. Before the bounding box predictions are made, a mask is produced for the visual area of the object, as is shown by the yellow mask in the adjacent image. Image 602 shows the mask produced for the visual area of the object. Image 603 shows a set of predicted bounding boxes (blue) as well as unimodal model bounding box predictions (red and orange). A set of distributed points is shown in image 603 representing sampled points for determining uncertainty in accordance with the technology described herein. As shown in image 603, the bounding box predictions for an object that is not occluded and can be seen well, are relatively close in their predicted volumes. A similar effect is shown in Figure 6B, wherein a box is imaged and there is relatively little uncertainty as to the shape of the box. Figure 6B includes image 611, illustrating an original image of an object, image 612, illustrating the mask produced over the visual area of the object, and image 613, showing a set of bounding boxes (blue) as well as unimodal model bounding boxes (red and orange). As a result of there being little uncertainty associated with the dimensions of the object in Figure 6B, the predicted bounding boxes have a very high degree of overlap, because there is little uncertainty regarding the size of the box. However, in both Figure 6A and Figures 6B, the unimodally-predicted boxes shown in red and orange are highly inaccurate as compared to the set of bounding boxes predicted with the autoregressive model.

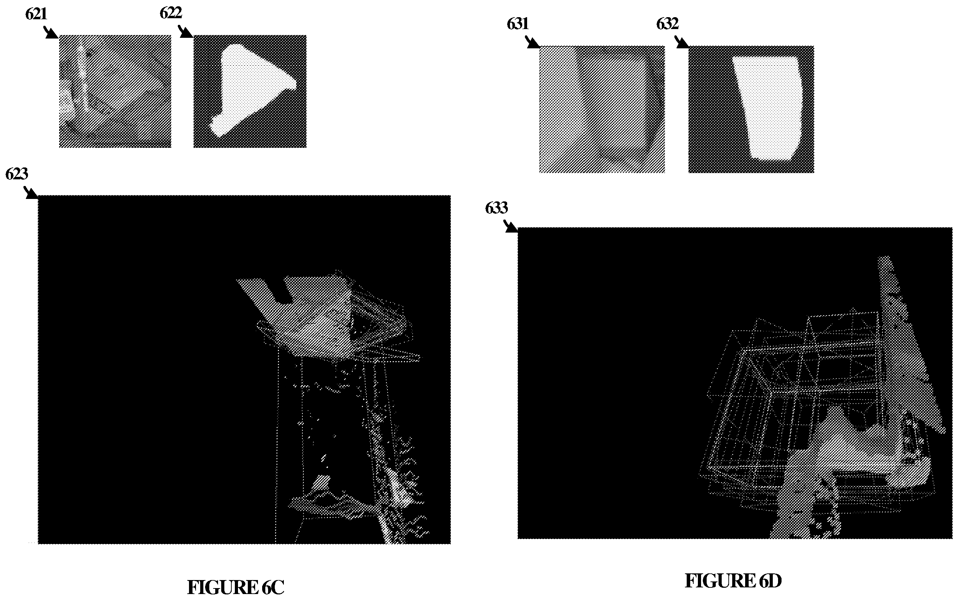

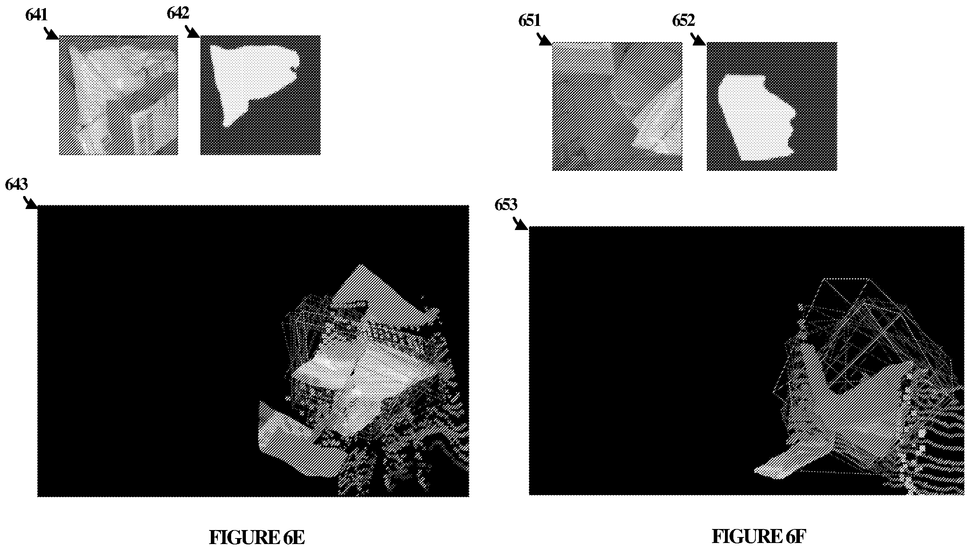

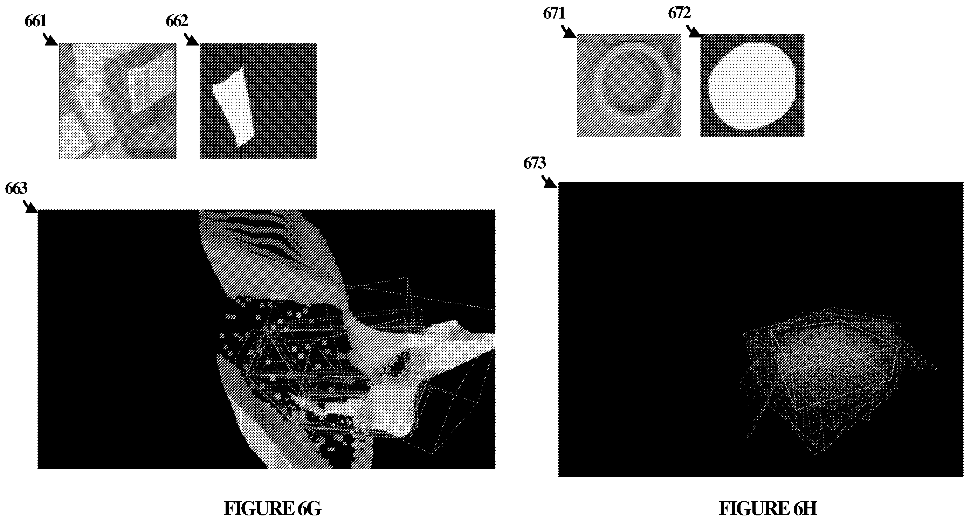

Figures 6C-6G show examples of imaged objects that are partially occluded by other objects. Figure 6C includes image 621, image 622, and image 623 showing an original image of an object, a masked version of the image, and a set of predicted bounding boxes for the object, respectively. In the example of Figure 6C, the bounding box predictions show a small degree of uncertainty, while the unimodally predicted bounding boxes show largely inaccurate predictions. Figure 6D includes image 631, image 632, and image 633 showing an original image of an object, a masked version of the image, and a set of predicted bounding boxes for the object, respectively. Figure 6D shows an occluded box with relatively more uncertainty as to the size of the box. Thus, there is a larger distribution of bounding box predictions shown in blue. However, the distribution of bounding boxes and their associated uncertainties, provide far more information related to what is certain and what is uncertain than the unimodal predictions. Figure 6E includes image 641, image 642, and image 643 showing an original image of an object, a masked version of the image, and a set of predicted bounding boxes for the object, respectively. Figure 6F includes image 651, image 652, and image 653 showing an original image of an object, a masked version of the image, and a set of predicted bounding boxes for the object, respectively. Figure 6G includes image 661, image 662, and image 663 showing an original image of an object, a masked version of the image, and a set of predicted bounding boxes for the object, respectively. Figures 6F and 6G show a relatively large degree of uncertainty as compared to some other examples, as a significant amount of visual information related to the size of each masked object is lacking in the captured image.

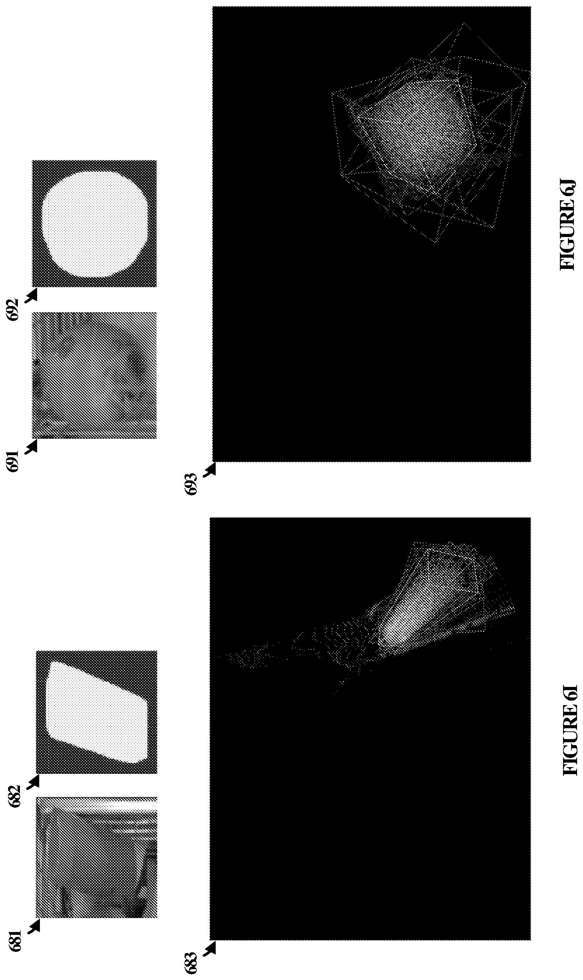

Figure 6H-6J illustrate non-packaged objects and the predicted bounding boxes for each item. Figure 6H includes image 671, image 672, and image 673 showing an original image of an object, a masked version of the image, and a set of predicted bounding boxes for the object, respectively. Figure 6I includes image 681, image 682, and image 683 showing an original image of an object, a masked version of the image, and a set of predicted bounding boxes for the object, respectively. Figure 6J includes image 691, image 692, and image 693 showing an original image of an object, a masked version of the image, and a set of predicted bounding boxes for the object, respectively. As is illustrated by Figures 6H-6J, although the objects of the present examples are non-rectangular, the bounding box predictions are still able to represent uncertainty related to their size and volume with the bounding box techniques described herein. The orange points shown in Figure 6H-6J are sampled points from the boxes for determining a confidence associated with object.

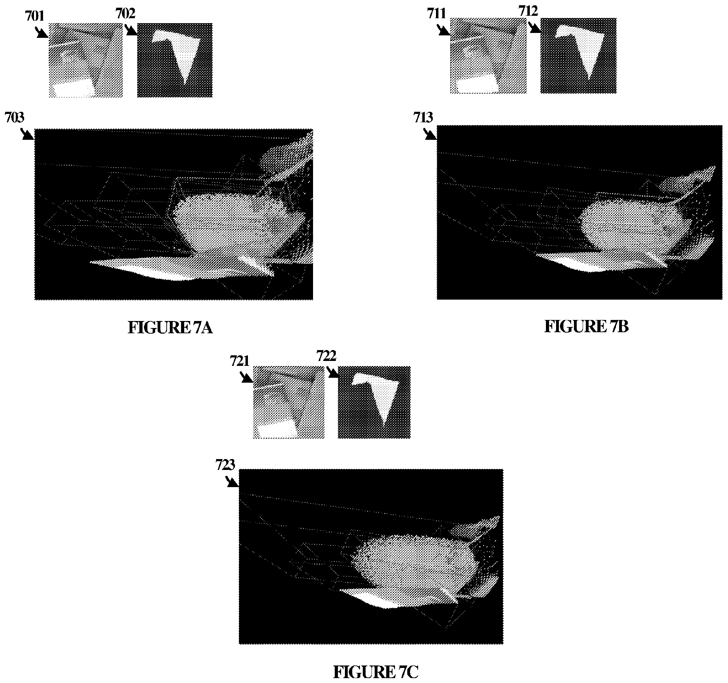

Figures 7A-7C illustrate bounding box predictions for an occluded object with inherent uncertainty each with a different confidence box shown in white. As the confidence requirement increases, the size of the determined bounding box increases. For example, if the model should contain the true object 50% of time, the box produced would be smaller than if the model needs to contain the true object 90% of the time. Figure 7A includes image 701, image 702, and image 703 showing an original image of an object, a masked version of the object, and a set of predicted bounding boxes for the object, respectively. Image 703 shows the 50% confidence box for the object. The boxes in blue show the distribution of predicted bounding boxes, while the box in white is the 50% confidence box. The 50% confidence box is found based on the distribution of sampled points shown in orange.

In accordance with the present example, a neural network outputs a plurality of blue boxes that represent hypotheses for where the object could be. In the present example, since the right side of the object is visible, it knows that the box starts from there without much uncertainty, but it does not know how far the box may extend on the left. Thus, depending on the desired purpose or outcome for a scenario, areas of more or less intersection can be chosen according to confidence requirements. Thus, if a scenario has high consequences if the size of the box is underestimated, more volume from the predicted boxes can be output. For a minimum threshold of 10%, if at least 10% of the predicted boxes contain a sampled point in space, then the point should be kept. Otherwise, the point is ignored or thrown out. The orange dots of the present example show kept points.

In the present example, increasing the confidence requirement causes the quantile shape predicted with the kept sampled points to increase. However, the present technology advantageously allows only the dimensions with uncertainty to increase as the confidence requirement increases. For example, if three sides in sight of the computer vision system, it is unnecessary to increase those dimensions if they information about them is already certain. However, for sides that are not visible, the dimensions of the predicted box will increase in those directions as the confidence tolerance increases. Figure 7B includes image 711, image 712, and image 713 showing an original image of an object, a masked version of the object, and a set of predicted bounding boxes for the object, respectively. Figure 7B shows the 70% confidence box in white. Figure 7C shows the 90% confidence box in white. Figure 7C includes image 721, image 722, and image 723 showing an original image of an object, a masked version of the object, and a set of predicted bounding boxes for the object, respectively. As can be seen, the white box gets larger subsequently from Figure 7A to Figure 7C as the confidence requirement increases. Alternatively, in some scenarios, if there is reason to be as conservative in a prediction as possible, the output model may be a union of all of the box predictions to get a large volume representation.

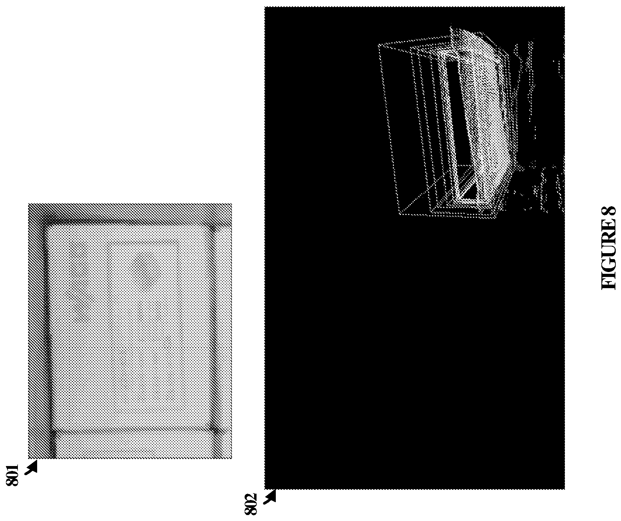

Figure 8 shows a scene and the bounding box predictions for a tightly packed box in a set of tightly packed boxes. Image 801 shows the view of a box from the perspective of a computer-imaging system. Image 802 shows the bounding box predictions for the box based on image 801. In this scene, the height of each box is inherently ambiguous because there is little to no information about the height or back side of the imaged box. A model that outputs one prediction would not be able to properly capture this uncertainty. However, an autoregressive can properly model the distribution of possible sizes. Using samples from the autoregressive model, confidence boxes can be efficiently computed and a final bounding box representing the smallest box for which the object is fully contained in the box within a certain degree of confidence.

The bounding box predictions of the present example are colored on a gradient from 50% confidence (yellow) to 100% confidence (red). It can be seen that certain dimensions remain the same or barely change as the confidence level increases. However, in the dimension that cannot be seen in the image, the depth of the object, the size of the bounding boxes grow greatly to account for the uncertainty in that dimension.

The flexibility of the confidence bound or percentage, allows for a tradeoff between being conservative and other performance metrics. For example, in some applications such as the example of Figure 1, where a double pick would be costly, a high confidence bound can be used for segmentation, such as 95%, to reduce the chance of picking two items on accident. In other settings where a scale may be used to detect double picks, a lower confidence can be used that would allow for more pickable area to choose from.

The processes described herein may be implemented in several different variations of media including software, hardware, firmware, and variations or combinations thereof. For example, methods of uncertainty modeling described herein may be implemented in software, while a computing vision system or robotic picking device may be implemented entirely in hardware or a combination. Similarly, embodiments of the technology may be implemented with a trained neural net entirely in software on an external computing system or may be implemented as a combination of the two across one or more devices. The computer vision systems and uncertainty modeling herein may be implemented on various types of components including entirely software-based implementations, entirely hardware-based aspects, such as trained computer vision systems, or variations and combinations thereof.

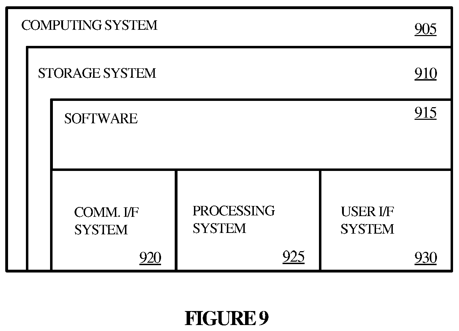

Figure 9 illustrates computing system 905 that is representative of any system or collection of systems in which the various processes, programs, services, and scenarios disclosed herein may be implemented. Examples of computing system 905 include, but are not limited to, desktop computers, laptop computers, server computers, routers, web servers, cloud computing platforms, and data center equipment, as well as any other type of physical or virtual server machine, physical or virtual router, container, and any variation or combination thereof.

Computing system 905 may be implemented as a single apparatus, system, or device or may be implemented in a distributed manner as multiple apparatuses, systems, or devices. Computing system 905 may include, but is not limited to, storage system 910, software 915, communication interface system 920, processing system 925, and user interface system 930. Components of computing system 905 may be optional or excluded in certain implementations. Processing system 925 is operatively coupled with storage system 910, communication interface system 920, and user interface system 930, in the present example.

Processing system 925 loads and executes software 915 from storage system 910. Software 915 includes and implements various uncertainty modeling processes described herein, which is representative of the methods discussed with respect to the preceding Figures. When executed by processing system 925, software 915 directs processing system 925 to operate for purposes of uncertainty modeling as described herein for at least the various processes, operational scenarios, and sequences discussed in the foregoing implementations. Computing system 905 may optionally include additional devices, features, or functionality not discussed for purposes of brevity.

Referring still to Figure 9, processing system 925 may comprise a microprocessor and other circuitry that retrieves and executes software 915 from storage system 910. Processing system 925 may be implemented within a single processing device but may also be distributed across multiple processing devices or sub-systems that cooperate in executing program instructions. Examples of processing system 925 include general purpose central processing units, graphical processing units, application specific processors, and logic devices, as well as any other type of processing device, combinations, or variations thereof.

Storage system 910 may comprise any computer readable storage media readable by processing system 925 and capable of storing software 915. Storage system 910 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 910 may also include computer readable communication media over which at least some of software 915 may be communicated internally or externally. Storage system 910 may be implemented as a single storage device but may also be implemented across multiple storage devices or sub-systems co-located or distributed relative to each other. Storage system 910 may comprise additional elements, such as a controller, capable of communicating with processing system 925 or possibly other systems.

Software 915 may be implemented in program instructions and among other functions may, when executed by processing system 925, direct processing system 925 to operate as described with respect to the various operational scenarios, sequences, and processes illustrated herein. For example, software 915 may include program instructions for implementing uncertainty modeling processes, computer vision processes, neural networks, decision making processes, bounding box processes, or any other reasoning or operational processes as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 915 may include additional processes, programs, or components, such as operating system software, modeling, robotic control software, computer vision software, virtualization software, or other application software. Software 915 may also comprise firmware or some other form of machine-readable processing instructions executable by processing system 925.

In general, software 915 may, when loaded into processing system 925 and executed, transform a suitable apparatus, system, or device (of which computing system 905 is representative) overall from a general-purpose computing system into a special-purpose computing system customized for one or more of the various operations or processes described herein. Indeed, encoding software 915 on storage system 910 may transform the physical structure of storage system 910. The specific transformation of the physical structure may depend on various factors in different implementations of this description. Examples of such factors may include, but are not limited to, the technology used to implement the storage media of storage system 910 and whether the computer-storage media are characterized as primary or secondary storage, as well as other factors.

For example, if the computer readable storage media are implemented as semiconductor-based memory, software 915 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 920 may include communication connections and devices that allow for communication with other computing systems (not shown) over communication networks or connections (not shown). Examples of connections and devices that together allow for inter-system communication may include network interface cards, antennas, power amplifiers, radio-frequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 905 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further, any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for," but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A method of operating a computer vision system, the method comprising:
identifying (305) a three-dimensional, 3D, object (115) in at least one image, wherein at least one side of the 3D object is not visible to the computer vision system;
predicting (310) a plurality of 3D bounding boxes that comprise the 3D object based on a portion of the 3D object visible in the at least one image, wherein each 3D bounding box of the plurality of 3D bounding boxes comprises at least a portion of the 3D object and represents a prediction of the minimum volume fully encompassing the 3D object;
sampling (315) a plurality of points from at least two 3D bounding boxes of the plurality of 3D bounding boxes; and
for each point of the plurality of points, identifying (320) a number of 3D bounding boxes of the plurality of 3D bounding boxes comprising the point;
determining (325) a confidence level for each 3D bounding box of the plurality of 3D bounding boxes, wherein the confidence level represents a likelihood that the 3D bounding box encompasses the 3D object; and
selecting a 3D bounding box of the plurality of 3D bounding boxes based on a predefined confidence bound and the confidence level for each 3D bounding box;
wherein determining a confidence level for each 3D bounding box of the plurality of 3D bounding boxes is based on the number of 3D bounding boxes comprising each point.

2. The method of claim 1, wherein the computer vision system is coupled to a robotic device (105), the robotic device (105) comprising at least one picking element (110).

3. The method of claim 2, further comprising, based on the selected 3D bounding box, directing the robotic device (105) to attempt to pick up the 3D object (115) using the picking element (110).

4. The method of claim 3, further comprising, determining that the robotic device (105) successfully picked up the 3D object using the picking element (110).

5. The method of claim 1, wherein the computer vision system comprises one or more cameras (130, 135).

6. A system (905) comprising:
one or more computer-readable storage media (910);
a processing system (925) operatively coupled to the one or more computer-readable storage media; and
program instructions (915), stored on the one or more computer-readable storage media (910), wherein the program instructions (915), when read and executed by the processing system (925), direct the processing system (925) to:
identify (305) a three-dimensional, 3D, object (115) in at least one image, wherein at least one side of the 3D object is not visible in the at least one image;
predict (310) a plurality of 3D bounding boxes that comprise the 3D object based on a portion of the 3D object visible in the at least one image, wherein each 3D bounding box of the plurality of 3D bounding boxes comprises at least a portion of the 3D object and represents a prediction of the minimum volume fully encompassing the 3D object;
sample (315) a plurality of points from at least two 3D bounding boxes of the plurality of 3D bounding boxes; and
for each point of the plurality of points, identify (320) a number of 3D bounding boxes of the plurality of 3D bounding boxes comprising the point;
determine (325) a confidence level for each 3D bounding box of the plurality of 3D bounding boxes, wherein the confidence level represents a likelihood that the 3D bounding box encompasses the 3D object;
select a 3D bounding box of the plurality of 3D bounding boxes based on a predefined confidence bound and the confidence level for each 3D bounding box;
wherein determining a confidence level for each 3D bounding box of the plurality of 3D bounding boxes is based on the number of 3D bounding boxes comprising each point.

7. The system of (905) claim 6, wherein the system further comprises a robotic device (105), the robotic devising comprising at least one picking element (110).

8. The system (905) of claim 7, wherein the program instructions (915), when read and executed by the processing system (925), further direct the processing system (925) to, based on the selected 3D bounding box, direct the robotic device (105) to attempt to pick up the 3D object using the picking element (110).

9. The system (905) of claim 8, wherein the program instructions (915), when read and executed by the processing system (925), further direct the processing system (925) to determine that the robotic device (105) successfully picked up the 3D object using the picking element (110).

10. The system (905) of claim 6, wherein the system further comprises one or more cameras (130, 135) that collect the at least one image.

11. One or more computer-readable storage media (910) having program instructions (915) stored thereon to generate three-dimensional (3D) bounding boxes for 3D objects, wherein the program instructions (915), when read and executed by a processing system (925), direct the processing system (925) to at least:
identify a 3D object in at least one image, wherein at least one side of the 3D object is not visible in the at least one image;
predict (310) a plurality of 3D bounding boxes that comprise the 3D object based on a portion of the 3D object visible in the at least one image, wherein each 3D bounding box of the plurality of 3D bounding boxes comprises at least a portion of the 3D object and represents a prediction of the minimum volume fully encompassing the 3D object;
sample (315) a plurality of points from at least two 3D bounding boxes of the plurality of 3D bounding boxes; and
for each point of the plurality of points, identify (320) a number of 3D bounding boxes of the plurality of 3D bounding box comprising the point;
determine (325) a confidence level for each 3D bounding box of the plurality of 3D bounding boxes, wherein the confidence level represents a likelihood that the 3D bounding box encompasses the 3D object; and
select a 3D bounding box of the plurality of 3D bounding boxes based on a predefined confidence bound and the confidence level for each 3D bounding box;
wherein determining a confidence level for each 3D bounding box of the plurality of 3D bounding boxes is based on the number of 3D bounding boxes comprising each point.

12. The one or more computer-readable storage media (910) of claim 11, wherein the program instructions (915), when read and executed by the processing system (925), further direct the processing system (925) to, based on the selected 3D bounding box, direct a robotic device (105) to attempt to pick up the 3D object using a picking element (110) of the robotic device (105).

13. The one or more computer-readable storage media (910) of claim 12, wherein the program instructions (915), when read and executed by the processing system (925), further direct the processing system (925) to determine that the robotic device (105) successfully picked up the 3D object using the picking element (110).

14. The one or more computer-readable storage media (910) of claim 13, wherein the program instructions (915), when read and executed by the processing system (925), further direct the processing system (925) to, in response to determining that the robotic device (105) successfully picked up the 3D object, direct the robotic device (105) to move the 3D object to a new location.

## Patentansprüche

1. Verfahren zum Betreiben eines Computervisionssystems, das Verfahren Folgendes umfassend:
Identifizieren (305) eines dreidimensionalen, 3D-, Objekts (115) in mindestens einem Bild, wobei mindestens eine Seite des 3D-Objekts für das Computervisionssystem nicht sichtbar ist;
Vorhersagen (310) einer Vielzahl von 3D-Begrenzungsboxen, die das 3D-Objekt umfassen, basierend auf einem Abschnitt des 3D-Objekts, der in dem mindestens einen Bild sichtbar ist, wobei jede 3D-Begrenzungsbox der Vielzahl von 3D-Begrenzungsboxen mindestens einen Abschnitt des 3D-Objekts umfasst und eine Vorhersage des minimalen Volumens, das das 3D-Objekt vollständig umschließt, darstellt;
Abtasten (315) einer Vielzahl von Punkten aus mindestens zwei 3D-Begrenzungsboxen der Vielzahl von 3D-Begrenzungsboxen; und
Identifizieren (320) einer Anzahl von 3D-Begrenzungsboxen aus der Vielzahl von 3D-Begrenzungsboxen, die den Punkt umfassen, für jeden Punkt der Vielzahl von Punkten;
Bestimmen (325) eines Konfidenzniveaus für jede 3D-Begrenzungsbox der Vielzahl von 3D-Begrenzungsboxen, wobei das Konfidenzniveau eine Wahrscheinlichkeit, dass die 3D-Begrenzungsbox das 3D-Objekt umschließt, darstellt; und
Auswählen einer 3D-Begrenzungsbox aus der Vielzahl von 3D-Begrenzungsboxen basierend auf einer vordefinierten Konfidenzgrenze und dem Konfidenzniveau für jede 3D-Begrenzungsbox;
wobei Bestimmen eines Konfidenzniveaus für jede 3D-Begrenzungsbox der Vielzahl von 3D-Begrenzungsboxen auf der Anzahl von 3D-Begrenzungsboxen, die jeden Punkt umfassen, basiert.

2. Verfahren nach Anspruch 1, wobei das Computervisionssystem mit einer Robotervorrichtung (105) gekoppelt ist, wobei die Robotervorrichtung (105) mindestens ein Greifelement (110) umfasst.

3. Verfahren nach Anspruch 2, ferner umfassend Anweisen der Robotervorrichtung (105), zu versuchen, das 3D-Objekt (115) unter Verwendung des Greifelements (110) aufzunehmen, basierend auf der ausgewählten 3D-Begrenzungsbox.

4. Verfahren nach Anspruch 3, ferner umfassend Bestimmen, dass die Robotervorrichtung (105) das 3D-Objekt erfolgreich unter Verwendung des Greifelements (110) aufgenommen hat.

5. Verfahren nach Anspruch 1, wobei das Computervisionssystem eine oder mehrere Kameras (130, 135) umfasst.

6. System (905), umfassend:
ein oder mehrere computerlesbare Speichermedien (910);
ein Verarbeitungssystem (925), das an das eine oder die mehreren computerlesbaren Speichermedien wirkgekoppelt ist; und
Programmanweisungen (915), die auf dem einem oder den mehreren computerlesbaren Speichermedien (910) gespeichert sind, wobei die Programmanweisungen (915), wenn sie von dem Verarbeitungssystem (925) gelesen und ausgeführt werden, das Verarbeitungssystem (925) zu Folgendem anweisen:
Identifizieren (305) eines dreidimensionalen, 3D-, Objekts (115) in mindestens einem Bild, wobei mindestens eine Seite des 3D-Objekts in dem mindestens einen Bild nicht sichtbar ist;
Vorhersagen (310) einer Vielzahl von 3D-Begrenzungsboxen, die das 3D-Objekt umfassen, basierend auf einem Abschnitt des 3D-Objekts, der in dem mindestens einen Bild sichtbar ist, wobei jede 3D-Begrenzungsbox der Vielzahl von 3D-Begrenzungsboxen mindestens einen Abschnitt des 3D-Objekts umfasst und eine Vorhersage des minimalen Volumens, das das 3D-Objekt vollständig umschließt, darstellt;
Abtasten (315) einer Vielzahl von Punkten aus mindestens zwei 3D-Begrenzungsboxen der Vielzahl von 3D-Begrenzungsboxen; und
Identifizieren (320) einer Anzahl von 3D-Begrenzungsboxen der Vielzahl von 3D-Begrenzungsboxen, die den Punkt umfassen, für jeden Punkt der Vielzahl von Punkten;
Bestimmen (325) eines Konfidenzniveaus für jede 3D-Begrenzungsbox der Vielzahl von 3D-Begrenzungsboxen, wobei das Konfidenzniveau eine Wahrscheinlichkeit darstellt, dass die 3D-Begrenzungsbox das 3D-Objekt umschließt;
Auswählen einer 3D-Begrenzungsbox aus der Vielzahl von 3D-Begrenzungsboxen basierend auf einer vordefinierten Konfidenzgrenze und dem Konfidenzniveau für jede 3D-Begrenzungsbox;
wobei Bestimmen eines Konfidenzniveaus für jede 3D-Begrenzungsbox der Vielzahl von 3D-Begrenzungsboxen auf der Anzahl von 3D-Begrenzungsboxen, die jeden Punkt umfassen, basiert.

7. System nach (905) Anspruch 6, wobei das System ferner eine Robotervorrichtung (105) umfasst, wobei die Robotervorrichtung mindestens ein Greifelement (110) umfasst.

8. System (905) nach Anspruch 7, wobei die Programmanweisungen (915), wenn sie von dem Verarbeitungssystem (925) gelesen und ausgeführt werden, das Verarbeitungssystem (925) ferner anweisen, basierend auf der ausgewählten 3D-Begrenzungsbox, die Robotervorrichtung (105) anzuweisen, zu versuchen, das 3D-Objekt unter Verwendung des Greifelements (110) aufzunehmen.

9. System (905) nach Anspruch 8, wobei die Programmanweisungen (915), wenn sie von dem Verarbeitungssystem (925) gelesen und ausgeführt werden, das Verarbeitungssystem (925) ferner anweisen, zu bestimmen, dass die Robotervorrichtung (105) das 3D-Objekt erfolgreich unter Verwendung des Greifelements (110) aufgenommen hat.

10. System (905) nach Anspruch 6, wobei das System ferner eine oder mehrere Kameras (130, 135) umfasst, die das mindestens eine Bild aufnehmen.

11. Ein oder mehrere computerlesbare Speichermedien (910), die Programmanweisungen (915) aufweisen, die darauf gespeichert sind, um dreidimensionale (3D) Begrenzungsboxen für 3D-Objekte zu generieren, wobei die Programmanweisungen (915), wenn sie von einem Verarbeitungssystem (925) gelesen und ausgeführt werden, das Verarbeitungssystem (925) mindestens zu Folgendem anweisen:
Identifizieren eines 3D-Objekts in mindestens einem Bild, wobei mindestens eine Seite des 3D-Objekts in dem mindestens einen Bild nicht sichtbar ist;
Vorhersagen (310) einer Vielzahl von 3D-Begrenzungsboxen, die das 3D-Objekt umfassen, basierend auf einem Abschnitt des 3D-Objekts, der in dem mindestens einen Bild sichtbar ist, wobei jede 3D-Begrenzungsbox der Vielzahl von 3D-Begrenzungsboxen mindestens einen Abschnitt des 3D-Objekts umfasst und eine Vorhersage des minimalen Volumens, das das 3D-Objekt vollständig umschließt, darstellt;
Abtasten (315) einer Vielzahl von Punkten aus mindestens zwei 3D-Begrenzungsboxen der Vielzahl von 3D-Begrenzungsboxen; und
Identifizieren (320) einer Anzahl von 3D-Begrenzungsboxen aus der Vielzahl von 3D-Begrenzungsbox, die den Punkt umfassen, für jeden Punkt der Vielzahl von Punkten;
Bestimmen (325) eines Konfidenzniveaus für jede 3D-Begrenzungsbox der Vielzahl von 3D-Begrenzungsboxen, wobei das Konfidenzniveau eine Wahrscheinlichkeit darstellt, dass die 3D-Begrenzungsbox das 3D-Objekt umschließt; und
Auswählen einer 3D-Begrenzungsbox aus der Vielzahl von 3D-Begrenzungsboxen basierend auf einer vordefinierten Konfidenzgrenze und dem Konfidenzniveau für jede 3D-Begrenzungsbox;
wobei Bestimmen eines Konfidenzniveaus für jede 3D-Begrenzungsbox der Vielzahl von 3D-Begrenzungsboxen auf der Anzahl von 3D-Begrenzungsboxen, die jeden Punkt umfassen, basiert.

12. Ein oder mehrere computerlesbare Speichermedien (910) nach Anspruch 11, wobei die Programmanweisungen (915), wenn sie von dem Verarbeitungssystem (925) gelesen und ausgeführt werden, das Verarbeitungssystem (925) ferner anweisen, basierend auf der ausgewählten 3D-Begrenzungsbox, eine Robotervorrichtung (105) anzuweisen, zu versuchen, das 3D-Objekt unter Verwendung eines Greifelements (110) der Robotervorrichtung (105) aufzunehmen.

13. Ein oder mehrere computerlesbare Speichermedien (910) nach Anspruch 12, wobei die Programmanweisungen (915), wenn sie von dem Verarbeitungssystem (925) gelesen und ausgeführt werden, das Verarbeitungssystem (925) ferner anweisen, zu bestimmen, dass die Robotervorrichtung (105) das 3D-Objekt erfolgreich unter Verwendung des Greifelements (110) aufgenommen hat.

14. Ein oder mehrere computerlesbare Speichermedien (910) nach Anspruch 13, wobei die Programmanweisungen (915), wenn sie von dem Verarbeitungssystem (925) gelesen und ausgeführt werden, das Verarbeitungssystem (925) ferner anweisen, als Reaktion auf das Bestimmen, dass die Robotervorrichtung (105) das 3D-Objekt erfolgreich aufgenommen hat, die Robotervorrichtung (105) anzuweisen, das 3D-Objekt zu einem neuen Standort zu bewegen.

## Revendications

1. Procédé de fonctionnement d'un système de vision artificielle, le procédé comprenant :
l'identification (305) d'un objet en trois dimensions, 3D (115) dans au moins une image, dans lequel au moins un côté de l'objet 3D n'est pas visible par le système de vision artificielle ;
la prédiction (310) d'une pluralité de cadres de délimitation 3D qui comprennent l'objet 3D sur la base d'une partie de l'objet 3D visible dans l'au moins une image, dans lequel chaque cadre de délimitation 3D parmi la pluralité de cadres de délimitation 3D comprend au moins une partie de l'objet 3D et représente une prédiction du volume minimum englobant entièrement l'objet 3D ;
l'échantillonnage (315) d'une pluralité de points provenant d'au moins deux cadres de délimitation 3D parmi la pluralité de cadres de délimitation 3D ; et
pour chaque point parmi la pluralité de points, l'identification (320) d'un certain nombre de cadres de délimitation 3D parmi la pluralité de cadres de délimitation 3D comprenant le point ;
la détermination (325) d'un niveau de confiance pour chaque cadre de délimitation 3D parmi la pluralité de cadres de délimitation 3D, dans lequel le niveau de confiance représente la probabilité que le cadre de délimitation 3D englobe l'objet 3D ; et
la sélection d'un cadre de délimitation 3D parmi la pluralité de cadres de délimitation 3D sur la base d'une limite de confiance prédéfinie et du niveau de confiance pour chaque cadre de délimitation 3D ;
dans lequel la détermination d'un niveau de confiance pour chaque cadre de délimitation 3D parmi la pluralité de cadres de délimitation 3D est basée sur le nombre de cadres de délimitation 3D comprenant chaque point.

2. Procédé selon la revendication 1, dans lequel le système de vision artificielle est couplé à un dispositif robotique (105), le dispositif robotique (105) comprenant au moins un élément de préhension (110).

3. Procédé selon la revendication 2, comprenant en outre, sur la base du cadre de délimitation 3D sélectionné, la commande du dispositif robotique (105) pour tenter de ramasser l'objet 3D (115) à l'aide de l'élément de préhension (110).

4. Procédé selon la revendication 3, comprenant en outre la détermination que le dispositif robotique (105) a ramassé avec succès l'objet 3D à l'aide de l'élément de préhension (110).

5. Procédé selon la revendication 1, dans lequel le système de vision artificielle comprend une ou plusieurs caméras (130, 135).

6. Système (905) comprenant :
un ou plusieurs supports de stockage lisibles par ordinateur (910) ;
un système de traitement (925) couplé de manière opérationnelle aux un ou plusieurs supports de stockage lisibles par ordinateur ; et
des instructions de programme (915), stockées sur les un ou plusieurs supports de stockage lisibles par ordinateur (910), dans lequel les instructions de programme (915), lorsqu'elles sont lues et exécutées par le système de traitement (925), ordonnent au système de traitement (925) d'effectuer les actions suivantes :
identifier (305) un objet en trois dimensions, 3D (115) dans au moins une image, dans lequel au moins un côté de l'objet 3D n'est pas visible dans l'au moins une image ;
prédire (310) une pluralité de cadres de délimitation 3D qui comprennent l'objet 3D sur la base d'une partie de l'objet 3D visible dans l'au moins une image, dans lequel chaque cadre de délimitation 3D parmi la pluralité de cadres de délimitation 3D comprend au moins une partie de l'objet 3D et représente une prédiction du volume minimum englobant entièrement l'objet 3D ;
échantillonner (315) une pluralité de points provenant d'au moins deux cadres de délimitation 3D parmi la pluralité de cadres de délimitation 3D ; et
pour chaque point parmi la pluralité de points, identifier (320) un certain nombre de cadres de délimitation 3D parmi la pluralité de cadres de délimitation 3D comprenant le point ;
déterminer (325) un niveau de confiance pour chaque cadre de délimitation 3D parmi la pluralité de cadres de délimitation 3D, dans lequel le niveau de confiance représente la probabilité que le cadre de délimitation 3D englobe l'objet 3D ;
sélectionner un cadre de délimitation 3D parmi la pluralité de cadres de délimitation 3D sur la base d'une limite de confiance prédéfinie et du niveau de confiance pour chaque cadre de délimitation 3D ;
dans lequel la détermination d'un niveau de confiance pour chaque cadre de délimitation 3D parmi la pluralité de cadres de délimitation 3D est basée sur le nombre de cadres de délimitation 3D comprenant chaque point.

7. Système selon (905) la revendication 6, dans lequel le système comprend en outre un dispositif robotique (105), le dispositif robotique comprenant au moins un élément de préhension (110).

8. Système (905) selon la revendication 7, dans lequel les instructions de programme (915), lorsqu'elles sont lues et exécutées par le système de traitement (925), ordonnent en outre au système de traitement (925) de, sur la base du cadre de délimitation 3D sélectionné, commander le dispositif robotique (105) pour tenter de ramasser l'objet 3D à l'aide de l'élément de préhension (110).

9. Système (905) selon la revendication 8, dans lequel les instructions de programme (915), lorsqu'elles sont lues et exécutées par le système de traitement (925), ordonnent en outre au système de traitement (925) de déterminer que le dispositif robotique (105) a ramassé avec succès l'objet 3D à l'aide de l'élément de préhension (110).

10. Système (905) selon la revendication 6, dans lequel le système comprend en outre une ou plusieurs caméras (130, 135) qui collectent l'au moins une image.

11. Un ou plusieurs supports de stockage lisibles par ordinateur (910) contenant des instructions de programme (915) stockées sur ceux-ci pour générer des cadres de délimitation en trois dimensions (3D) pour des objets 3D, dans lequel les instructions de programme (915), lorsqu'elles sont lues et exécutées par un système de traitement (925), ordonnent au système de traitement (925) d'effectuer au moins les actions suivantes :
identifier un objet 3D dans au moins une image, dans lequel au moins un côté de l'objet 3D n'est pas visible dans l'au moins une image ;
prédire (310) une pluralité de cadres de délimitation 3D qui comprennent l'objet 3D sur la base d'une partie de l'objet 3D visible dans l'au moins une image, dans lequel chaque cadre de délimitation 3D parmi la pluralité de cadres de délimitation 3D comprend au moins une partie de l'objet 3D et représente une prédiction du volume minimum englobant entièrement l'objet 3D ;
échantillonner (315) une pluralité de points provenant d'au moins deux cadres de délimitation 3D parmi la pluralité de cadres de délimitation 3D ; et
pour chaque point parmi la pluralité de points, identifier (320) un certain nombre de cadres de délimitation 3D parmi la pluralité de cadres de délimitation 3D comprenant le point ;
déterminer (325) un niveau de confiance pour chaque cadre de délimitation 3D parmi la pluralité de cadres de délimitation 3D, dans lequel le niveau de confiance représente la probabilité que le cadre de délimitation 3D englobe l'objet 3D ; et
sélectionner un cadre de délimitation 3D parmi la pluralité de cadres de délimitation 3D sur la base d'une limite de confiance prédéfinie et du niveau de confiance pour chaque cadre de délimitation 3D ;
dans lequel la détermination d'un niveau de confiance pour chaque cadre de délimitation 3D parmi la pluralité de cadres de délimitation 3D est basée sur le nombre de cadres de délimitation 3D comprenant chaque point.

12. Un ou plusieurs supports de stockage lisibles par ordinateur (910) selon la revendication 11, dans lesquels les instructions de programme (915), lorsqu'elles sont lues et exécutées par le système de traitement (925), ordonnent en outre au système de traitement (925) de, sur la base du cadre de délimitation 3D sélectionné, commander un dispositif robotique (105) pour tenter de ramasser l'objet 3D à l'aide d'un élément de préhension (110) du dispositif robotique (105).

13. Un ou plusieurs supports de stockage lisibles par ordinateur (910) selon la revendication 12, dans lesquels les instructions de programme (915), lorsqu'elles sont lues et exécutées par le système de traitement (925), ordonnent en outre au système de traitement (925) de déterminer que le dispositif robotique (105) a ramassé avec succès l'objet 3D, à l'aide de l'élément de préhension (110).

14. Un ou plusieurs supports de stockage lisibles par ordinateur (910) selon la revendication 13, dans lesquels les instructions de programme (915), lorsqu'elles sont lues et exécutées par le système de traitement (925), ordonnent en outre au système de traitement (925) de, en réponse à la détermination que le dispositif robotique (105) a ramassé avec succès l'objet 3D, commander au dispositif robotique (105) de déplacer l'objet 3D vers un nouvel emplacement.
